# EUROPÄISCHE PATENTSCHRIFT

(11) **EP 2 435 491 B1**
(45) Veröffentlichungstag und Bekanntmachung des Hinweises auf die Patenterteilung: **26.04.2017**
(21) Anmeldenummer: 10724035.0
(22) Anmeldetag: 27.05.2010
(51) Int. Cl.: C08G 18/48, C08G 18/71, C08G 63/695, C08G 63/91, C08G 18/42, C09J 175/04, C08G 18/10, C09J 175/06

(54) **SILANFUNKTIONELLE POLYESTER IN FEUCHTIGKEITSHÄRTENDEN ZUSAMMENSETZUNGEN AUF BASIS SINLANFUNKTIONELLER POLYMERE**
SILANE-FUNCTIONAL POLYESTER IN MOISTURE-HARDENED COMPOUNDS ON THE BASIS OF SILANE-FUNCTIONAL POLYMERS
POLYESTER À SILANE FONCTIONNEL DANS DES COMPOSITIONS DURCISSANT À L'HUMIDITÉ À BASE DE POLYMÈRES À SILANE FONCTIONNEL

(30) Priorität: 27.05.2009 EP 09161264
(43) Veröffentlichungstag der Anmeldung: 04.04.2012
(73) Patentinhaber: Sika Technology AG, 6340 Baar (CH)
(72) Erfinder: RUTZ, Daniele, CH-8049 Zürich (CH); OERTLI, Marcel, CH-8049 Zürich (CH); JUCKER, Barbara, CH-8057 Zürich (CH)
(74) Vertreter: Sika Patent Attorneys
(86) Internationale Anmeldenummer: PCT/EP2010/057295
(87) Internationale Veröffentlichungsnummer: WO 2010/136511

(56) Entgegenhaltungen:
- WO-A-2008/027496
- US-A- 4 408 021

## Beschreibung

### Technisches Gebiet

Das Gebiet betrifft silanfunktionelle Polyester, welche als Bestandteil in feuchtigkeitshärtenden Zusammensetzungen wie Klebstoffen, Dichtstoffen oder Beschichtungen auf Basis silanterminierter Polymere eingesetzt werden.

### Stand der Technik

Für viele Anwendungen ist es wünschenswert, feuchtigkeitshärtende Zusammensetzungen als Klebstoffe, Dichtstoffe oder Beschichtungen einzusetzen, welche eine hohe Anfangsfestigkeit aufweisen. Beispielsweise weisen Klebstoffe mit einer niedrigen Anfangsfestigkeit den Nachteil auf, dass die mittels Klebstoff gefügten Teile, bis zum Aufbau einer gewissen Festigkeit fixiert werden müssen, damit sie in der gewünschten Position verbleiben.

Zur Bereitstellung von feuchtigkeitshärtenden Zusammensetzungen mit hohen Anfangsfestigkeiten sind verschiedene Ansätze bekannt. Weit verbreitet ist dabei der Einsatz zweikomponentiger Zusammensetzungen oder von reaktiven Warm- oder Heissschmelzzusammensetzungen, insbesondere von Warm- oder Heissschmelzklebstoffen, so genannten Warm- oder Hot-Melts. Bekannt ist auch eine Kombination beider Ansätze.

Warm- oder Heissschmelzklebstoffe weisen dabei den Nachteil auf, dass ihre Viskosität unmittelbar nach der Applikation sehr stark ansteigt. Dadurch sind beispielsweise Korrekturen in der Ausrichtung von zwei zu verklebenden Substraten nach dem Fügen nur erschwert möglich. Weiterhin sind diese Klebstoffe in der Regel für viele Anwendungen zu wenig elastisch um thermische Ausdehnungen zu kompensieren.

Neben reinen Warm- oder Heissschmelzklebstoffen, in welchen die feuchtigkeitsreaktiven Bestandteile vollständig oder zumindest grösstenteils als bei Raumtemperatur feste Bestandteile vorliegen, sind auch Warm- oder Heissschmelzklebstoffe bekannt, bei welchen nur ein Teil der feuchtigkeitsreaktiven Bestandteile bei Raumtemperatur fest ist. Diese enthalten im Allgemeinen neben einem flüssigen, reaktiven Bestandteil, eine ebenfalls reaktive oder nichtreaktive Schmelzkomponente. Um Zusammensetzungen zu erhalten, welche möglichst gute mechanische Eigenschaften aufweisen, werden reaktive Schmelzkomponenten bevorzugt, wobei das Spektrum an solchen sehr breit ist. Für feuchtigkeitshärtende Zusammensetzungen auf Basis von silanfunktionellen Polymeren werden als reaktive Schmelzkomponenten bevorzugt Umsetzungsprodukte von beliebigen Polyolen mit Polyisocyanaten, welche anschliessend mit Amino- oder Mercaptosilanen umgesetzt werden, eingesetzt. Beispielsweise ist eine derartige Zusammensetzung beschrieben in WO 2004/005420 A1.

WO 2008/027496 offenbart silanfunktionelle Polyester für Klebstoffanwendungen, die durch Umsetzung eines Polyesterpolyols mit einem Isocyanatosilan erhalten werden. Sämtliche bekannte reaktive Schmelzkomponenten bieten jedoch Verbesserungspotential in Bezug auf die erzielte Anfangsfestigkeit und bezüglich der mechanischen Eigenschaften der ausgehärteten Zusammensetzungen.

### Darstellung der Erfindung

Aufgabe der vorliegenden Erfindung ist es daher, ein silanfunktionelles Polymer bereitzustellen, welches als Bestandteil in feuchtigkeitshärtenden Zusammensetzungen auf Basis silanfunktioneller Polymere zu Zusammensetzungen führt, welche als Klebstoffe, Dichtstoffe oder Beschichtungen mit einer verbesserten Anfangsfestigkeit verwendet werden können.

Überraschenderweise wurde nun gefunden, dass spezifische silanfunktionelle Polyester gemäss Anspruch 1 diese Aufgabe lösen.

Für den Fachmann war es in keiner Weise naheliegend, aus der grossen Anzahl an möglichen Bestandteilen, welche in feuchtigkeitshärtenden Zusammensetzungen auf Basis von silanterminierten Polymeren eingesetzt werden, spezifische silanfunktionelle Polyester, wie sie in der vorliegenden Erfindung beschrieben sind, auszuwählen, welche einen bemerkenswert positiven Effekt auf die Anfangsfestigkeit und auf die mechanischen Eigenschaften der Zusammensetzung haben.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist in einem ersten Aspekt ein silanfunktioneller Polyester der Formel (I).

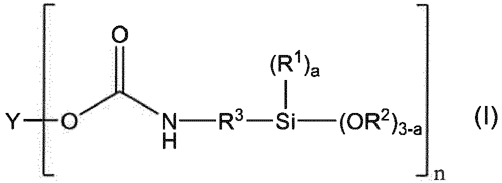

Der Rest Y steht dabei für einen n-wertigen Rest eines, bei Raumtemperatur festen, kristallinen, Hydroxylgruppen terminierten Polyesters P mit einem mittleren Molekulargewicht Mₙ von > 2500 g/mol bis 7000 g/mol, nach Entfernung von n Hydroxylgruppen.

Der Rest R¹ steht für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cyclo-aliphatische und/oder aromatische Anteile aufweist. Insbesondere steht R¹ für eine Methyl-, Ethyl- oder Isopropylgruppe.

Der Rest R² steht für einen Acylrest oder für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist. Vorzugsweise steht der Rest R² für eine Acyl- oder Alkylgruppe mit 1 bis 5 C-Atomen, insbesondere für eine Methyl- oder für eine Ethyl- oder für eine Isopropylgruppe.

Der Rest R³ steht für einen linearen oder verzweigten, zweiwertigen Kohlenwasserstoffrest mit 1 bis 12 C-Atomen, welcher gegebenenfalls cyclische und/oder aromatischen Anteile, und gegebenenfalls ein oder mehrere Heteroatome aufweist. Vorzugsweise steht der Rest R³ für einen Alkylenrest mit 1 bis 3 C-Atomen, insbesondere mit 3 C-Atomen.

Weiterhin steht der Index a für einen Wert von 0, 1 oder 2, insbesondere für 0 oder 1.

Der Index n steht für einen Wert von 1 bis 3, insbesondere für 2.

Innerhalb einer Silangruppe im Polyester der Formel (I) stehen R¹ und R² jeweils unabhängig voneinander für die beschriebenen Reste. So sind beispielsweise auch Polyester der Formel (I) mit Endgruppen möglich, welche Ethoxydimethoxysilan-Endgruppen (R² = Methyl, R² = Methyl, R² = Ethyl) sind.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument stets das Molekulargewichtsmittel Mₙ (Zahlenmittel).

Als "fest" werden im vorliegenden Dokument Substanzen verstanden, welche ohne äussere Einwirkung ihre Form nicht verändern oder sich nur schwer verformen lassen, insbesondere sind sie jedoch nicht fliessfähig. Als "flüssig" werden entsprechend Substanzen verstanden, welche sich verformen lassen und fliessfähig sind, was auch hochviskose und pastöse Substanzen einschliesst.

Als "Raumtemperatur" wird im vorliegenden Dokument eine Temperatur von 23 °C bezeichnet.

Als Hydroxylgruppen terminierter Polyester **P** sind insbesondere Polyester geeignet, welche nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Bevorzugt liegt das mittlere Molekulargewicht Mₙ des Polyesters P im Bereich von 3500 g/mol bis 6000 g/mol.

Im bevorzugten Molekulargewichtsbereich weisen die Polyester **P,** gegenüber kettenverlängerten Polyestern oder Polyestern mit einer inhomogenen Molekulargewichtsverteilung, verbesserte Kristallisationseigenschaften auf, welche dazu führen, dass ein erfindungsgemässer silanfunktioneller Polyester, bei seinem Einsatz als Schmelzkomponente in einer Zusammensetzung, eine verbesserte Anfangsfestigkeit dieser Zusammensetzung herbeiführt.

Handelt es sich beim Polyester **P** um einen kristallinen Polyester, liegt der Kristallisationspunkt des Polyesters **P** bevorzugt weniger als 30 °C unterhalb des Schmelzpunktes des Polyesters **P.**

Zusammensetzungen, enthaltend eine erfindungsgemässe reaktive Schmelzkomponente auf Basis eines Polyesters **P,** bei welchen der Kristallisationspunkt des Polyesters **P** weniger als 30 °C unterhalb des Schmelzpunktes des Polyesters **P** liegt, sind besonders bevorzugt, weil dadurch die Zeitspanne von der Applikation der Zusammensetzung mit aufgeschmolzener Schmelzkomponente, bis zum Erreichen einer genügenden, durch Kristallisation der Schmelzkomponente hervorgerufenen, Anfangsfestigkeit verkürzt werden kann. So müssen beispielsweise Substrate, welche mit einem Klebstoff auf Basis von Zusammensetzungen, enthaltend eine erfindungsgemässe reaktive Schmelzkomponente, miteinander verklebt werden, bis zum Erreichen einer genügenden Anfangsfestigkeit des Klebstoffs, nicht oder nur für kurze Zeit fixiert werden, damit sie sich nicht gegeneinander verschieben. Dies ist insbesondere vorteilhaft bei vertikalen Verklebungen, beispielsweise bei der Verklebung einer Windschutzscheibe eines Fahrzeugs oder eines Transportmittels.

Erfindungsgemässe silanfunktionelle Polyester der Formel (I) sind typischerweise erhältlich durch die Umsetzung eines Isocyanatosilans **IS** der Formel (II) mit einem vorhergehend beschriebenen Polyester **P.**

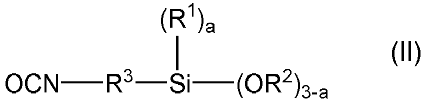

R¹, R², R³ und a wurden bereits vorhergehend beschrieben.

Diese Umsetzung erfolgt im stöchiometrischen Verhältnis der Isocyanatgruppen zu den Hydroxylgruppen des Polyesters **P** von 1:1, oder mit leichtem Überschuss an Hydroxylgruppen, beispielsweise bei Temperaturen von 20 °C bis 100 °C, gegebenenfalls unter Mitverwendung von Katalysatoren.

Beispiele für geeignete Isocyanatosilane **IS** der Formel (II) sind 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

In einem zweiten Aspekt betrifft die vorliegende Erfindung die Verwendung eines silanfunktionellen Polyesters gemäss vorhergehender Beschreibung als Bestandteil in feuchtigkeitshärtenden Klebstoffen, Dichtstoffen oder Beschichtungen auf Basis von silanterminierten Polymeren, insbesondere in feuchtigkeitshärtenden Klebstoffen.

Als feuchtigkeitshärtende Klebstoffe, Dichtstoffe oder Beschichtung auf Basis von silanterminierten Polymeren eignen sich insbesondere feuchtigkeitshärtende Zusammensetzungen umfassend mindestens ein silanfunktionelles Polymer **STP,** welches insbesondere Endgruppen der Formel (III) aufweist.

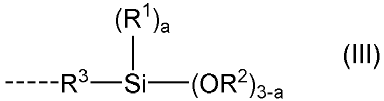

R¹, R², R³ und a wurden bereits vorhergehend beschrieben.

In einer ersten Ausführungsform ist das silanfunktionelle Polymer **STP** ein silanfunktionelles Polyurethanpolymer **STP1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **STP1** gänzlich frei von Isocyanatgruppen ist.

Das Silan, welches mindestens eine gegenüber Isocyanatgruppen reaktive Gruppe aufweist, ist insbesondere ein Mercaptosilan oder ein Aminosilan, vorzugsweise ein Aminosilan.

Bevorzugt ist das Aminosilan ein Aminosilan **AS** der Formel (IV), 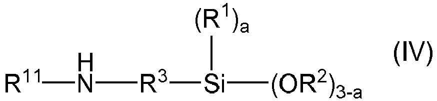 wobei R¹, R², R³ und a bereits vorhergehend beschrieben worden sind, und R¹¹ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (V) steht.

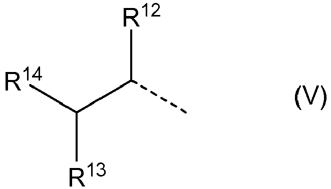

Dabei stehen die Reste R¹² und R¹³ unabhängig voneinander für ein Wasserstoffatom oder für einen Rest aus der Gruppe umfassend -R¹⁵, -CN und -COOR¹⁵.

Der Rest R¹⁴ steht für ein Wasserstoffatom oder für einen Rest aus der Gruppe umfassend -CH₂-COOR¹⁵, -COOR¹⁵, -CONHR¹⁵, -CON(R¹⁵)₂, -CN, -NO₂, -PO(OR¹⁵)₂, -SO₂R¹⁵ und -SO₂OR¹⁵.

Der Rest R¹⁵ steht für einen, gegebenenfalls mindestens ein Heteroatom enthaltenden, Kohlenwasserstoffrest mit 1 bis 20 C-Atomen.

Beispiele für geeignete Aminosilane **AS** der Formel (IV) sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS,** bei denen R¹¹ in Formel (IV) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **STP1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktiven Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2:1 erhalten werden.

Geeignete Polyole sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, wie sie vorhergehend als Polyester **P** beschrieben sind, wobei das Molekulargewicht dieser Polyesterpolyole, welche zur Herstellung des silanfunktionellen Polymers **P** verwendet werden, so gewählt ist, dass die Polyesterpolyole bei Raumtemperatur flüssig sind.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, sogenannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin sind dies Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol oder durch Oxidation von Polybutadien hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren (kommerziell erhältlich unter dem Namen Hypro^{®} CTBN von der Firma Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyan at (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Beispielsweise sind geeignete silanfunktionelle Polymere **STP1** kommerziell erhältlich unter dem Handelsnamen Polymer ST50 von der Firma Hanse Chemie AG, Deutschland, sowie unter dem Handelsnamen Desmoseal^{®} von der Firma Bayer MaterialScience AG, Deutschland.

Das silanfunktionelle Polymer **STP** ist in einer zweiten Ausführungsform ein silanfunktionelles Polyurethanpolymer **STP2,** erhältlich durch die Umsetzung eines Isocyanatosilans **IS** der Formel (II), wie es vorhergehend beschrieben ist, mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4000 bis 30'000 g/mol, insbesondere solche mit einem Molekulargewicht im Bereich von 8000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS.** Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **STP1** verwendet wird.

Beispielsweise sind geeignete silanfunktionelle Polymere **STP2** kommerziell erhältlich unter den Handelsnamen SPUR^{+®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **STP** ein silanfunktionelles Polymer **STP3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.

Beispielsweise sind geeignete silanfunktionelle Polymere **STP3** kommerziell erhältlich unter dem Handelsnamen MS-Polymer^{®}, insbesondere als MS-Polymer^{®} S203H, S303H, S227, S810, MA903 und S943, Silyl^{®} SAX220, SAX350, SAX400 und SAX725, Silyl^{®} SAT350 und SAT400, sowie XMAP^{®} SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Üblicherweise ist das silanfunktionelle Polymer **STP** in einer Menge von 10 bis 80 Gew.-%, bevorzugt in einer Menge von 15 bis 60 Gew.-%, bezogen auf die gesamte Zusammensetzung, vorhanden.

Meist bevorzugt ist die Verwendung eines silanfunktionellen Polyesters gemäss vorhergehender Beschreibung in feuchtigkeitshärtenden Klebstoffen, Dichtstoffen oder Beschichtungen auf Basis von silanfunktionellen Polyurethanpolymeren, insbesondere von silanfunktionellen Polyurethanpolymer des Typs **STP1.**

In einem weiteren Aspekt betrifft die Erfindung die Verwendung eines silanfunktionellen Polyesters gemäss vorhergehender Beschreibung als Bestandteil in einem feuchtigkeitshärtenden Klebstoff, wobei dieser ein zweikomponentiger, feuchtigkeitshärtender Klebstoff ist, bestehend aus einer Komponente **A** umfassend mindestens einen silanfunktionellen Polyester der Formel (I), wie er vorhergehend beschrieben ist, sowie mindestens ein silanterminiertes Polymer **STP,** und einer Komponente **B** umfassend Wasser.

Insbesondere entspricht die Komponente **A** des zweikomponentigen, feuchtigkeitshärtenden Klebstoffs einer feuchtigkeitshärtenden Zusammensetzung, wie sie vorhergehend beschreiben wurde und ist demnach so beschaffen, dass sie für sich alleine mittels Luftfeuchtigkeit vollständig aushärten kann. Ein derartig ausgehärteter Klebstoff liefert vergleichbare Endfestigkeitswerte wie die Mischung der Komponenten **A** und **B** nach der Aushärtung.

Bei der Komponente **B** handelt es sich insbesondere um eine wasserhaltige Paste, in welcher das enthaltene Wasser durch mindestens ein Trägermaterial, welches typischerweise ausgewählt ist aus der Gruppe bestehend aus einem Weichmacher, einem Verdickungsmittel und einem Füllstoff, verdickt wird.

Der Wassergehalt in der Komponente **B** kann je nach Ausführungsform der Komponente **A** variiert werden. Dem Fachmann ist dabei selbstverständlich klar, dass die Menge der eingesetzten Komponente **B,** abhängig von der darin enthaltenen Wassermenge ist. Enthält also beispielsweise die Komponente **B** einen hohen Wasseranteil von > 50 Gew.-% so wird die Komponente **B** üblicherweise in einer Menge von 1 bis 10 Gew.-% bezogen auf die Menge der Komponente **A** eingesetzt. Enthält die Komponente **B** hingegen beispielsweise nur etwa 5 Gew.-% Wasser, kann die Komponente **B** auch in einer Menge von etwa 50 Gew.-% bezogen auf die Menge der Komponente **A** eingesetzt werden.

Vorzugsweise liegt der Wasseranteil an der gesamten zweikomponentigen Zusammensetzung in dem Bereich, dass mit dem vorhandenen Wasser 50 bis 100 % aller reaktiven Gruppen in der Zusammensetzung umgesetzt werden können.

Insbesondere wird die beschriebene zweikomponentige Zusammensetzung so eingesetzt, dass das Gewichtsverhältnis der Komponente **A** zu Komponente **B ≥** 1:1, insbesondere von 3:1 bis 70:1, bevorzugt von 10:1 bis 20:1, beträgt.

Im Fall eines zweikomponentigen, feuchtigkeitshärtenden Klebstoffs werden die Komponenten **A** und **B** typischerweise in separaten Verpackungen oder in einer Verpackung aufbewahrt, welche zwei von einander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in U S 2003/0051610 A1, deren gesamte Offenbarung hiermit durch Bezugnahme eingeschlossen wird.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

In einem weiteren, bevorzugten Aspekt betrifft die Erfindung die Verwendung eines silanfunktionellen Polyesters gemäss vorhergehender Beschreibung als reaktive Schmelzkomponente in feuchtigkeitshärtenden Warm- oder Heissschmelzklebstoffen auf Basis von silanterminierten Polymeren, wie sie vorhergehend beschrieben sind. Dabei sind die erfindungsgemässen silanfunktionellen Polyester der Formel (I) bei Raumtemperatur fest und werden durch Erwärmen des feuchtigkeitshärtenden Warm- oder Heissschmelzklebstoffs aufgeschmolzen. Nach der Applikation des Klebstoffs im erwärmten Zustand verfestigt sich dieser einerseits beim Abkühlen durch Kristallisation der Schmelzkomponente und vernetzt andererseits über eine Reaktion mit Wasser. Das Wasser kann dabei entweder aus der Luft stammen (Luftfeuchtigkeit), oder kann dem Klebstoff, beispielsweise in Form einer Wasser enthaltenden Komponente, wie sie vorhergehend beschreiben ist, zugesetzt werden.

Warmschmelzklebstoffe werden üblicherweise bei Temperaturen von etwa 40 °C bis 80 °C appliziert. Die Applikationstemperatur von Heissschmelzklebstoffen liegt üblicherweise über etwa 80 °C. Dem Fachmann ist jedoch selbstverständlich bekannt, dass diese Bereiche sich überlappen und es keine scharfe Grenze zwischen Warm- und Heissschmelzklebstoffen gibt.

Als Warm- oder Heissschmelzklebstoffe werden hierbei nicht nur Klebstoffe verstanden, welche bei Raumtemperatur vollständig fest sind, sondern auch solche, welche bei Raumtemperatur flüssig sind, jedoch eine bei Raumtemperatur feste Schmelzkomponente enthalten.

Ein derartiger Klebstoff hat gegenüber einem reinen reaktiven Warm- oder Heissschmelzklebstoff, in welchem die gesamte reaktive Polymerkomponente als Schmelzkomponente eingesetzt wird, den Vorteil, dass er auch nach der Applikation noch eine gewisse Verformbarkeit aufweist, wodurch einfache Korrekturen bei grossflächigen Verklebungen noch möglich sind. Gegenüber feuchtigkeitshärtenden Klebstoffen, welche keine Schmelzkomponente aufweisen bietet ein derartiger Klebstoff der Vorteil, dass er eine deutlich verbesserte Anfangsfestigkeit aufweist.

In einem weiteren Aspekt betrifft die Erfindung eine Zusammensetzung umfassend
- mindestens einen silanfunktionellen Polyester der Formel (I) 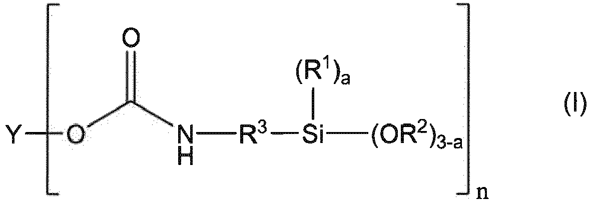 wobei
   Y für einen n-wertigen Rest eines, bei Raumtemperatur festen, Hydroxylgruppen terminierten Polyesters P nach Entfernung von n Hydroxylgruppen steht;
   R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
   R² für einen Acylrest oder für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
   R³ für einen linearen oder verzweigten, zweiwertigen Kohlenwasserstoffrest mit 1 bis 12 C-Atomen steht, welcher gegebenenfalls cyclische und/oder aromatischen Anteile, und gegebenenfalls ein oder mehrere Heteroatome aufweist;
   der Index a für einen Wert von 0, 1 oder 2 steht; und
      der Index n für einen Wert von 1 bis 3 steht;; sowie
- mindestens ein silanterminiertes Polymer **STP,**
   wobei das silanfunktionelle Polymer **STP**
   ein silanfunktionelles Polyurethanpolymer **STP1** ist, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist,
   oder
   ein silanfunktionelles Polyurethanpolymer **STP2** ist, erhältlich durch die Umsetzung eines Isocyanatosilans IS der Formel (II) 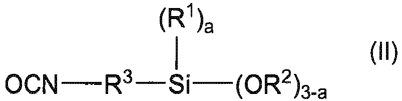 mit einem Polymer, welches Hydroxylgruppen, Mercaptogruppen und/oder Aminogruppen aufweist, wobei ein Hydroxylgruppen aufweisendes Polymer
   - ein hochmolekulares Polyoxyalkylenpolyol mit einem Ungesättigtheitsgrad tiefer als 0.02 mEq/g und mit einem Molekulargewicht im Bereich von 4000 bis 30'000 g/mol ist, oder
   - ein Hydroxylgruppen aufweisendes Polyurethanpolymer erhältlich durch die Umsetzung von mindestens einem Polyiso¬cyanat mit mindestens einem Polyol und dieses Polyol ausgewählt ist aus Polyoxyalkylenpolyol, Polyesterpolyol, bei welchem das Molekulargewicht so gewählt ist, dass das Polyesterpolyol bei Raumtemperatur flüssig ist, Polycarbonatpolyol, Poly(meth)acrylatpolyol, polyhydroxyfunktionelle Fette und Öle, Polykohlenwasserstoffpolyol und polyhydroxyfunktionelles Acrylnitril/Butadien-Copolymer
      oder
      ein silanfunktionelles Polymer **STP3** ist, welches erhältlich ist durch eine Hydrosilylierungsreaktion von Polymeren mit endständigen Doppelbindungen.

Meist bevorzugt handelt es sich beim silanfunktionellen Polymer **STP** um ein silanfunktionelles Polyurethanpolymer, insbesondere um ein silanfunktionelles Polyurethanpolymer des Typs **STP1.**

Vorzugsweise enthält die Zusammensetzung weiterhin mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calcium-carbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 20 bis 60 Gew.-%, bevorzugt 30 bis 60 Gew.-%, bezogen auf die gesamte Zusammensetzung.

Weiterhin enthält die erfindungsgemässe Zusammensetzung insbesondere mindestens einen Katalysator für die Vernetzung der silandfunktionellen Polymere mittels Feuchtigkeit. Derartige Katalysatoren sind insbesondere Metallkatalysatoren in Form von Organozinnverbindungen wie Dibutylzinndilaurat und Dibutylzinndiacetylacetonat, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldi-methoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Bei der Applikation der beschriebenen Zusammensetzung auf mindestens einen Festkörper oder Artikel kommen die Silangruppen des Polymers in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

Die erfindungsgemässe Zusammensetzung wird insbesondere verwendet in einem Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2;**
ii') Aushärtung der Zusammensetzung mittels Wasser, insbesondere in der Form von Luftfeuchtigkeit;
wobei die Substrate **S1** und **S2** gleich oder verschieden voneinander sind.

Handelt es sich bei der erfindungsgemässen Zusammensetzung um einen Warm- oder Heissschmelzklebstoff, geht dem Schritt i) bzw. i') der Applikation der Zusammensetzung ein Schritt des Erwärmens des Klebstoffs voraus, bei welchem der erfindungsgemässe Polyester der Formel (I) als Schmelzkomponente aufgeschmolzen wird.

Handelt es sich bei der erfindungsgemässen Zusammensetzung um eine zweikomponentige Zusammensetzung, geht dem Schritt i) bzw. i') der Applikation der Zusammensetzung ein Schritt des Mischens der beiden Komponenten **A** und **B** voraus.

Handelt es sich bei der erfindungsgemässen Zusammensetzung um einen zweikomponentigen Warm- oder Heissschmelzklebstoff, gehen dem Schritt i) bzw. i') der Applikation der Zusammensetzung ein Schritt des Erwärmens des Klebstoffs, insbesondere der Komponente **A,** und des anschliessenden Mischens der beiden Komponenten **A** und **B** voraus.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung wird typischerweise mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung eine ausgehärtete Zusammensetzung, welche durch die Reaktion einer vorhergehend beschriebenen Zusammensetzung mit Wasser, insbesondere in Form von Luftfeuchtigkeit erhältlich ist.

Bei den Artikeln, welche mit einer erfindungsgemässen Zusammensetzung verklebt, abgedichtet oder beschichtet werden, handelt es sich insbesondere um ein industriell gefertigtes Gut oder ein Konsumgut, insbesondere ein Fenster, eine Haushaltsmaschine, oder ein Transportmittel, insbesondere ein Fahrzeug, oder ein Anbauteil eines Fahrzeugs.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Der **Schmelzpunkt** ("Smp.") und der **Kristallisationspunkt** ("Krp.") wurden mittels DSC (Differential Scanning Calorimetry) auf einem Gerät DSC822e von Mettler Toledo, Schweiz, mit automatischem Probenahmegerät (Mettler Toledo TS0801 RO Sample Robot) bestimmt. Dabei durchliefen die Proben folgen Zyklus: 1) 1 Minute bei 15 °C (konstante Temperatur); 2) Erhitzen von 15 °C auf 100 °C (Temperaturgradient +10 °C/min); 3) 1 Minute bei 100 °C (konstante Temperatur); 4) Abkühlen von 100 °C auf 15 °C (Temperaturgradient -10 °C/min); 5) 5 Minuten bei 15 °C (konstante Temperatur); 6) Erhitzen von 15 °C auf 100 °C (Temperaturgradient +10 °C/min).

Schmelzkomponenten mit einem Kristallisationspunkt unterhalb von Temperaturen im Bereich der Raumtemperatur (23 °C), sind nur bedingt geeignet und nicht bevorzugt, da die Kristallisation der Schmelzkomponente bei Raumtemperatur stattfinden sollte. Ebenfalls nicht bevorzugt sind Schmelzkomponenten, deren Kristallisationspunkt mehr als 30 °C unterhalb ihres Schmelzpunkts liegen, da es in diesem Fall relativ lange dauert bis eine genügende Anfangsfestigkeit erreicht wird.

Der **E-Modul** bei 0 bis 5% Dehnung wurde nach DIN EN 53504 (Zuggeschwindigkeit: 200 mm/min) an während 7 Tagen bei 23 °C und 50% relativer Luftfeuchtigkeit ausgehärteten Filmen mit einer Schichtdicke von 2 mm bestimmt.

Die **Shore A-Härte** wurde bestimmt nach DIN 53505, an während 7 Tagen bei 23 °C und 50 % relativer Luftfeuchtigkeit ausgehärteten Probekörpern mit einer Schichtdicke von 6 mm.

Für die Bestimmung der **Auspresskraft** ("APK") wurden die Zusammensetzungen je in eine Kartusche gefüllt. Danach wurden die Kartuschen geöffnet und es wurde eine Düse von 5 mm Innendurchmesser aufgeschraubt. Mit einem Auspressgerät "Zwick 1120" wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften gemessen nach 22 mm, 24 mm, 26 mm und 28 mm. Nach 30 mm Auspressung wurde gestoppt. Auf gleiche Weise wurde die Auspresskraft bei 70 °C bestimmt. Hierfür wurden die Kartuschen vor der Bestimmung der Auspresskraft auf eine Temperatur von 70 °C erwärmt.

Die **Anfangsfestigkeit** der Zusammensetzungen wurde über das Abrutschverhalten des Klebstoffs unter statischer Belastung bestimmt. Dabei wurde eine dreiecksförmige Klebstoffraupe (Breite: 10 mm; Höhe: 12 mm) bei einer Temperatur von 70 °C horizontal an einer vertikal positionierten Glasscheibe appliziert, nach 30 Sekunden mit einem Glasprüfkörper (100 x 40 x 6 mm) einer Masse von 120 g auf der gesamten Breite von 40 mm der grössten Fläche des Glasprüfkörpers (entspricht 30 g/cm) auf 5 mm verpresst und für 30 Sekunden fixiert. Danach wurde die Fixierung gelöst und es wurde die Abrutschdistanz ("Slip down") des Glasprüfkörpers nach 2 Minuten gemessen. Zusammensetzungen mit einer Abrutschdistanz von 0.5 mm oder mehr weisen eine mangelhafte Anfangsfestigkeit auf.

### Herstellung der Schmelzkomponenten

***SKomp.1:*** 3600 g Dynacoll^{®} 7381 (Evonik Degussa GmbH, Deutschland, kristalliner Polyester, Mₙ = 3500 g/mol, OH-Zahl 29.6) und 400 g Diisodecylphtalat (DIDP, Palatinol^{®} Z, BASF SE, Deutschland) wurden während 1 Stunde bei 120 °C im Vakuum gerührt, um vorhandenes Wasser zu entfernen. Die Mischung wurde dann auf 90 °C abgekühlt und das Vakuum wurde mit Stickstoff gebrochen. Unter Stickstoffatmosphäre wurden 390.66 g 3-Isocyanatopropyltrimethoxysilan (Geniosil^{®} GF-40, Wacker Chemie AG, Deutschland) und 5.28 g Di-n-butyl-zinndilaurat (Metatin^{®} K 712, Acima AG, Schweiz) eingemischt und bei 90 °C weitergerührt, bis keine freien Isocyanatgruppen mehr titrimetrisch nachgewiesen werden konnten.

***SKomp.2:*** 250 g Dynacoll^{®} 7365 (Evonik Degussa GmbH, kristalliner Polyester, Mₙ = 6500 g/mol, OH-Zahl 17.9) und 27.78 g Diisodecylphtalat (Palatinol^{®} Z) wurden während 1 Stunde bei 120 °C im Vakuum gerührt, um vorhandenes Wasser zu entfernen. Die Mischung wurde dann auf 90°C abgekühlt und das Vakuum wurde mit Stickstoff gebrochen. Unter Stickstoffatmosphäre wurden 16.41 g 3-Isocyanatopropyltrimethoxysilan (Geniosil^{®} GF-40) und 0.35 g Di-n-butyl-zinndilaurat (Metatin^{®} K 712) eingemischt und bei 90 °C weitergerührt, bis ein konstanter Gehalt an freien Isocyanatgruppen von 0.09 Gew.-% titrimetrisch nachgewiesen werden konnten. Als Korrektur wurden 20.34 g Dynacoll^{®} 7365 eingemischt und weiter gerührt, bis keine freien Isocyanatgruppen mehr titrimetrisch nachgewiesen werden konnten.

***SKomp.3:*** 250 g Dynacoll^{®} 7362 (Evonik Degussa GmbH, kristalliner Polyester, Mₙ = 2000 g/mol, OH-Zahl 60.0) und 27.78 g Diisodecylphtalat (Palatinol^{®} Z) wurden während 1 Stunde bei 120 °C im Vakuum gerührt, um vorhandenes Wasser zu entfernen. Die Mischung wurde dann auf 90 °C abgekühlt und das Vakuum wurde mit Stickstoff gebrochen. Unter Stickstoffatmosphäre wurden 54.99 g 3-Isocyanatopropyltrimethoxysilan (Geniosil^{®} GF-40) und 0.40 g Di-n-butyl-zinndilaurat (Metatin^{®} K 712) eingemischt und bei 90 °C weitergerührt, bis ein konstanter Gehalt an freien Isocyanatgruppen von 0.26 Gew.-% titrimetrisch nachgewiesen werden konnten. Als Korrektur wurden 19.52 g Dynacoll^{®} 7362 eingemischt und weiter gerührt, bis keine freien Isocyanatgruppen mehr titrimetrisch nachgewiesen werden konnten.

***SKomp.4:*** 250 g Dynacoll^{®} 7250 (Evonik Degussa GmbH, flüssiger Polyester, Mₙ = 5500 g/mol, OH-Zahl 22.5) und 27.78 g Diisodecylphtalat (Palatinol^{®} Z) wurden während 1 Stunde bei 120 °C im Vakuum gerührt, um vorhandenes Wasser zu entfernen. Die Mischung wurde dann auf 90 °C abgekühlt und das Vakuum wurde mit Stickstoff gebrochen. Unter Stickstoffatmosphäre wurden 20.62 g 3-Isocyanatopropyltrimethoxysilan (Geniosil^{®} GF-40) und 0.36 g Di-n-butyl-zinndilaurat (Metatin^{®} K 712) eingemischt und bei 90 °C weitergerührt, bis ein konstanter Gehalt an freien Isocyanatgruppen von 0.28 Gew.-% titrimetrisch nachgewiesen werden konnten. Als Korrektur wurden 48.99 g Dynacoll^{®} 7250 eingemischt und weiter gerührt, bis ein Gehalt an freien Isocyanatgruppen von 0.09 Gew.-% erreicht wurde.

***SKomp.5:*** 250 g Dynacoll PEG 4000 (Polyethylenglykol 4000, Fluka Chemie GmbH, Schweiz, Mₙ = 4000 g/mol, OH-Zahl 32.0) und 27.78 g Diisodecylphtalat (Palatinol^{®} Z) wurden während 1 Stunde bei 120 °C im Vakuum gerührt, um vorhandenes Wasser zu entfernen. Die Mischung wurde dann auf 90 °C abgekühlt und das Vakuum wurde mit Stickstoff gebrochen. Unter Stickstoffatmosphäre wurden 29.33 g 3-Isocyanatopropyltrimethoxysilan (Geniosil^{®} GF-40) und 0.37 g Di-n-butyl-zinndilaurat (Metatin^{®} K 712) eingemischt und bei 90 °C weitergerührt, bis keine freien Isocyanatgruppen mehr titrimetrisch nachgewiesen werden konnten.

***SKomp.6:*** 352 g Dynacoll^{®} 7362 und 27.78 g Diisodecylphtalat (Palatinol^{®} Z) wurden während 1 Stunde bei 120 °C im Vakuum gerührt, um vorhandenes Wasser zu entfernen. Die Mischung wurde dann auf 90°C abgekühlt und das Vakuum wurde mit Stickstoff gebrochen. Unter Stickstoffatmosphäre wurden 64.41 g Isophorondiisocyanat (Vestanat^{®} IPDI, Evonik Degussa GmbH), und 0.27 g Di-n-butyl-zinndilaurat (Metatin^{®} K 712) eingemischt und bei 90 °C weitergerührt, bis ein konstanter Gehalt an freien Isocyanatgruppen von 2.71 Gew.-% titrimetrisch nachgewiesen werden konnte. Anschliessend wurden 100.3 g N-(3-Trimethoxysilyl-propyl)-amino-berstein-säure-diethylester zugegeben und weiter gerührt, bis keine freien Isocyanat-gruppen mehr titrimetrisch nachgewiesen werden konnten.
N-(3-Trimethoxysilyl-propyl)-amino-bernsteinsäure-diethylester wurde wie folgt hergestellt: 13.4 g 3-Aminopropyl-trimethoxysilan (Silquest^{®} A-1110, Momentive Performance Materials Inc., USA) wurden vorgelegt. Unter gutem Rühren wurden bei Raumtemperatur langsam 12.87 g Maleinsäure-diethylester (Fluka Chemie GmbH, Schweiz) zugegeben und die Mischung während 2 Stunden bei Raumtemperatur gerührt.

***SKomp.7:*** 266 g Dynacoll^{®} 7365 und 27.78 g Diisodecylphtalat (Palatinol^{®} Z) wurden während 1 Stunde bei 120 °C im Vakuum gerührt, um vorhandenes Wasser zu entfernen. Die Mischung wurde dann auf 90°C abgekühlt und das Vakuum wurde mit Stickstoff gebrochen. Unter Stickstoffatmosphäre wurden 19.21 g Isophorondiisocyanat (Vestanat^{®} IPDI), und 0.24 g Di-n-butyl-zinndilaurat (Metatin^{®} K 712) eingemischt und bei 90 °C weitergerührt, bis ein konstanter Gehalt an freien Isocyanatgruppen von 1.0 Gew.-% titrimetrisch nachgewiesen werden konnte. Anschliessend wurden 24.46 g N-(3-Trimethoxysilyl-propyl)-amino-bersteinsäure-diethylester zugegeben und weiter gerührt, bis keine freien Isocyanatgruppen mehr titrimetrisch nachgewiesen werden konnten.

### Herstellung des silanfunktionellen Polyurethanpolymers SH

Unter Stickstoffatmosphäre wurden 1000 g Polyol Acclaim^{®} 12200 (Bayer MaterialScience AG, Deutschland; low monol Polyoxypropylendiol; OH-Zahl 11.0 mg KOH/g; Wassergehalt ca. 0.02 Gew.-%), 46.17 g Isophorondiisocyanat (Vestanat^{®} IPDI), 261.72 g Diisodecylphtalat (Palatinol^{®} Z) und 0.14 g Di-*n*-butyl-zinndilaurat (Metatin^{®} K 712) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.70 Gew.-% erreicht. Anschliessend wurden 69.88 g N-(3-Trimethoxysilylpropyl)-amino-bernsteinsäure-diethylester beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23 °C) abgekühlt und unter Ausschluss von Feuchtigkeit aufbewahrt (theoretischer Polymergehalt = 90%).

### Herstellung der Klebstoffe

In einem Vakuummischer wurden entsprechend der in Tabelle 1 angegebenen Gewichtsanteile das silanfunktionelle Polyurethanpolymer SH, Diisodecylphtalat (Palatinol^{®} Z) und Vinyltrimethoxysilan (Silquest^{®} A-171 von Momentive Performance Materials Inc., USA) während 5 Minuten gut vermischt. Anschliessend wurden getrocknete, gefällte Kreide (Socal^{®} U1S2, Solvay SA, Belgien) und getrockneter Russ (Monarch^{®} 570 von Cabot Corp., USA) sowie die Schmelzkomponente **(*SKomp.1 - SKomp.7*),** welche zuvor während 2 Tagen in einem Ofen bei 70 °C aufgeschmolzen wurde, während 15 Minuten bei 60 °C mitgeknetet. Bei ausgeschalteter Heizung wurden anschliessend N-(2-Aminoethyl)-(3-aminopropyl)trimethoxysilan (Silquest^{®} A-1120 von Momentive Performance Materials Inc.) und Di-*n*-butyl-zinndilaurat (Metatin^{®} K712) als 10 %-ige Lösung in DIDP unter Vakuum während 10 Minuten zu einer homogenen Paste verarbeitet. Diese wurde dann in innenlackierte Aluminium-Spreizkolbenkartuschen abgefüllt.

**Tabelle 1 Zusammensetzungen der erfindungsgemässen Klebstoffe 1 und 2 sowie der Referenzbeispiele Ref1 bis Ref6 in Gew.-% und die Resultate der Messungen; Referenzbeispiel Ref6 enthält keine Schmelzkomponente;**

| | ***1*** | ***2*** | ***Ref1*** | ***Ref2*** | ***Ref3*** | ***Ref4*** | ***Ref5*** | ***Ref6*** |
|---|---|---|---|---|---|---|---|---|
| ***SH*** | 50 | 50 | 50 | 50 | 50 | 50 | 50 | 50 |
| Palatinol^{®} Z | 5.5 | 5.5 | 5.5 | 5.5 | 5.5 | 5.5 | 5.5 | 9.5 |
| Silquest^{®} A-171 | 1 | 1 | 1 | 1 | 1 | 1 | 1 | 1 |
| Socal^{®} U1S2 | 20 | 20 | 20 | 20 | 20 | 20 | 20 | 20 |
| Monarch^{®} 570 | 17 | 17 | 17 | 17 | 17 | 17 | 17 | 17 |
| ***SKomp.1*** | 4 | | | | | | | |
| ***SKomp.2*** | | 4 | | | | | | |
| ***SKomp.3*** | | | 4 | | | | | |
| ***SKomp.4*** | | | | 4 | | | | |
| ***SKomp.5*** | | | | | 4 | | | |
| ***SKomp.6*** | | | | | | 4 | | |
| ***SKomp.7*** | | | | | | | 4 | |
| Silquest^{®} A-1120 | 1 | 1 | 1 | 1 | 1 | 1 | 1 | 1 |
| Metatin^{®} K712 ^{a)} | 1.5 | 1.5 | 1.5 | 1.5 | 1.5 | 1.5 | 1.5 | 1.5 |
| Smp. [°C] ^{b)} | 65 | 55 | 51 | k.A.^{c)} | 62 | 49 | 55 | - |
| Krist.pkt. [°C] ^{b)} | 42 | 30 | 25 | k.A.^{c)} | 30 | 15 | 24 | - |
| E-Modul [MPa] | 14.0 | 10.5 | 11.5 | 5.3 | 7.5 | 11 | 9 | 4.5 |
| Shore A | 72 | 70 | 72 | 64 | 72 | 73 | 69 | 61 |
| APK 23 °C [N] | >2000 | >2000 | >2000 | 1402 | >2000 | >2000 | >2000 | 865 |
| APK 70 °C [N] | 879 | 1251 | 997 | 891 | 563 | 595 | 987 | 442 |
| Slip down [mm] | 0 | 0 | 1 | 1.5 | 0 | 1 | 0.5 | 4 |

| | | | | | | | | |
|---|---|---|---|---|---|---|---|---|
| a) 10 %-ige Lösung in DIDP; b) Schmelz- und Kristallisationspunkt wurden von den jeweiligen Schmelzkomponenten alleine bestimmt; c) Schmelzkomponente ***SKomp.4*** ist bei Raumtemperatur flüssig, so dass Schmelz- und Kristallisationspunkt nicht bestimmt wurden. | | | | | | | | |

## Patentansprüche

1. Silanfunktioneller Polyester der Formel (I) 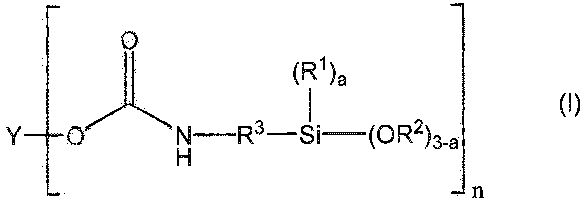 wobei
Y für einen n-wertigen Rest eines, bei Raumtemperatur festen, kristallinen, Hydroxylgruppen terminierten Polyesters **P** mit einem mittleren Molekulargewicht Mₙ von > 2500 g/mol bis 7000 g/mol, nach Entfernung von n Hydroxylgruppen steht;
R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
R² für einen Acylrest oder für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist; R³ für einen linearen oder verzweigten, zweiwertigen Kohlenwasserstoffrest mit 1 bis 12 C-Atomen steht, welcher gegebenenfalls cyclische und/oder aromatischen Anteile, und gegebenenfalls ein oder mehrere Heteroatome aufweist;
der Index a für einen Wert von 0, 1 oder 2 steht; und
der Index n für einen Wert von 1 bis 3 steht.

2. Silanfunktioneller Polyester gemäss Anspruch 1, **dadurch gekennzeichnet, dass** der Polyester P ein mittleres Molekulargewicht Mₙ von 3500 g/mol bis 6000 g/mol aufweist.

3. Silanfunktioneller Polyester gemäss einem der vorhergehenden Ansprüche, **dadurch gekennzeichnet, dass** a für einen Wert von 0 oder 1 steht.

4. Silanfunktioneller Polyester gemäss einem der vorhergehenden Ansprüche, **dadurch gekennzeichnet, dass** n für einen Wert von 2 steht.

5. Silanfunktioneller Polyester gemäss einem der vorhergehenden Ansprüche, **dadurch gekennzeichnet, dass** R² für eine Acyl- oder Alkylgruppe mit 1 bis 5 C-Atomen steht.

6. Silanfunktioneller Polyester gemäss einem der vorhergehenden Ansprüche, **dadurch gekennzeichnet, dass** R³ für einen Alkylenrest mit 1 bis 3 C-Atomen steht.

7. Silanfunktioneller Polyester einem der vorhergehenden Ansprüche, **dadurch gekennzeichnet, dass** der Kristallisationspunkt des Polyesters P weniger als 30 °C unterhalb des Schmelzpunktes des Polyesters P liegt.

8. Verwendung eines silanfunktionellen Polyesters gemäss einem der Ansprüche 1 bis 7 als Bestandteil in feuchtigkeitshärtenden Klebstoffen, Dichtstoffen oder Beschichtungen auf Basis von silanterminierten Polymeren.

9. Verwendung gemäss Anspruch 8 als reaktive Schmelzkomponente in feuchtigkeitshärtenden Warm- oder Heissschmelzklebstoffen auf Basis von silanterminierten Polymeren.

10. Verwendung gemäss Anspruch 8, **dadurch gekennzeichnet, dass** der feuchtigkeitshärtende Klebstoff ein zweikomponentiger, feuchtigkeitshärtender Klebstoff ist, bestehend aus
einer Komponente **A** umfassend mindestens einen silanfunktionellen Polyester gemäss einem der Ansprüche 1 bis 7 sowie mindestens ein silanterminiertes Polymer; und
einer Komponente **B** umfassend Wasser.

11. Verwendung gemäss einem der Ansprüche 8 bis 10, **dadurch gekennzeichnet, dass** das silanterminierte Polymer ein silanterminiertes Polyurethanpolymer **STP1** ist, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist.

12. Zusammensetzung umfassend
- mindestens einen silanfunktionellen Polyester der Formel (I) 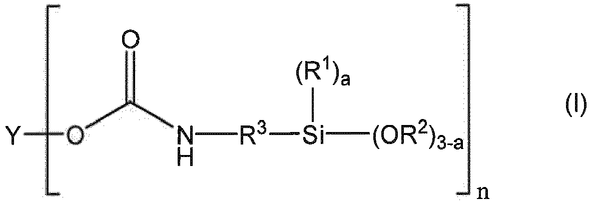 wobei
Y für einen n-wertigen Rest eines, bei Raumtemperatur festen, Hydroxylgruppen terminierten Polyesters P nach Entfernung von n Hydroxylgruppen steht;
R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
R² für einen Acylrest oder für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
R³ für einen linearen oder verzweigten, zweiwertigen Kohlenwasserstoffrest mit 1 bis 12 C-Atomen steht, welcher gegebenenfalls cyclische und/oder aromatischen Anteile, und gegebenenfalls ein oder mehrere Heteroatome aufweist;
der Index a für einen Wert von 0, 1 oder 2 steht; und
der Index n für einen Wert von 1 bis 3 steht; sowie
- mindestens ein silanfunktionelles Polymer **STP,** wobei das silanfunktionelle Polymer **STP**
ein silanfunktionelles Polyurethanpolymer **STP1** ist, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist,
oder
ein silanfunktionelles Polyurethanpolymer **STP2** ist, erhältlich durch die Umsetzung eines Isocyanatosilans IS der Formel (II) 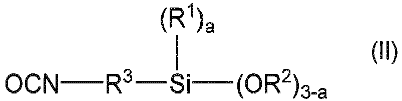 mit einem Polymer, welches Hydroxylgruppen, Mercaptogruppen und/oder Amino¬gruppen aufweist, wobei ein Hydroxylgruppen aufweisendes Polymer
- ein hochmolekulares Polyoxyalkylenpolyol mit einem Ungesättigtheitsgrad tiefer als 0.02 mEq/g und mit einem Molekulargewicht im Bereich von 4000 bis 30'000 g/mol ist, oder
- ein Hydroxylgruppen aufweisendes Polyurethanpolymer erhältlich durch die Umsetzung von mindestens einem Polyiso¬cyanat mit mindestens einem Polyol und dieses Polyol ausgewählt ist aus Polyoxyalkylenpolyol, Polyesterpolyol, bei welchem das Molekulargewicht so gewählt ist, dass das Polyesterpolyol bei Raumtemperatur flüssig ist, Polycarbonatpolyol, Poly(meth)acrylatpolyol, polyhydroxyfunktionelle Fette und Öle, Polykohlenwasserstoffpolyol und polyhydroxyfunktionelles Acrylnitril/Butadien-Copolymer
oder
ein silanfunktionelles Polymer **STP3** ist, welches erhältlich ist durch eine Hydrosilylierungsreaktion von Polymeren mit endständigen Doppel¬bindungen.

13. Zusammensetzung gemäss Anspruch 12, **dadurch gekennzeichnet, dass** das silanterminierte Polymer ein silanterminiertes Polyurethanpolymer **STP1** ist.

## Claims

1. Silane-functional polyester of formula (I) 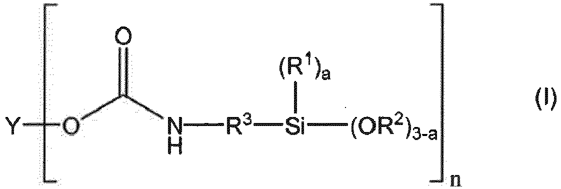 wherein
Y is an n-valent residue of a polyester **P** which is solid at room temperature, crystalline and terminated by hydroxy groups, having an average molecular weight Mₙ of > 2500 g/mol to 7000 g/mol, after removal of n hydroxy groups;
R¹ is a linear or branched, monovalent hydrocarbon residue having 1 to 12 carbon atoms, optionally having one or more C-C multiple bonds and/or having optionally cycloaliphatic and/or aromatic portions;
R² is an acyl residue or a linear or branched, monovalent hydrocarbon residue having 1 to 12 carbon atoms, optionally having one or more C-C multiple bonds and/or having optionally cycloaliphatic and/or aromatic portions;
R³ is a linear or branched, divalent hydrocarbon residue having 1 to 12 carbon atoms, optionally having cyclic and/or aromatic portions, and optionally having one or more heteroatoms;
the index a has a value of 0, 1 or 2; and
the index n has a value of 1 to 3.

2. Silane-functional polyester according to claim 1, **characterized in that** the polyester **P** has an average molecular weight Mₙ of 3500 g/mol to 6000 g/mol.

3. Silane-functional polyester according to any of the preceding claims, **characterized in that** a has a value of 0 or 1.

4. Silane-functional polyester according to any of the preceding claims, **characterized in that** n has a value of 2.

5. Silane-functional polyester according to any of the preceding claims, **characterized in that** R² is an acyl or alkyl group having 1 to 5 carbon atoms.

6. Silane-functional polyester according to any of the preceding claims, **characterized in that** R³ is an alkylene residue having 1 to 3 carbon atoms.

7. Silane-functional polyester according to any of the preceding claims, **characterized in that** the crystallization point of the polyester **P** is less than 30 °C below the melting point of the polyester **P.**

8. Use of a silane-functional polyester according to any of Claims 1 to 7 as component in moisture-curing adhesives, sealants or coatings based on silane-terminated polymers.

9. Use according to Claim 8 as a reactive melt component in moisture-curing warm- or hot-melt adhesives based on silane-terminated polymers.

10. Use according to Claim 8, **characterized in that** the moisture-curing adhesive is a two-component, moisture-curing adhesive consisting of a component **A** comprising at least one silane-functional polyester according to any of Claims 1 to 7 and at least one silane-terminated polymer; and
a component **B** comprising water.

11. Use according to any of Claims 8 to 10, **characterized in that** the silane-terminated polymer is a silane-terminated polyurethane polymer **STP1,** which is obtainable by the reaction of a silane having at least one isocyanate-reactive group, with a polyurethane polymer containing isocyanate groups.

12. Composition comprising
- at least one silane-functional polyester of formula (I) 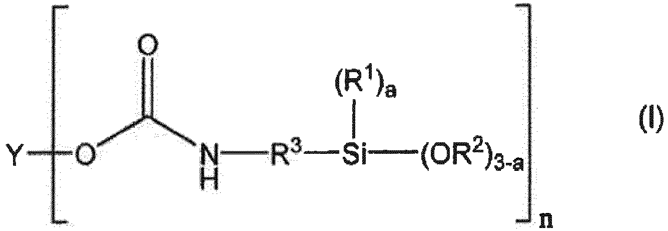 wherein
Y is an n-valent residue of a polyester P which is solid at room temperature and terminated by hydroxy groups, after removal of n hydroxy groups; R¹ is a linear or branched, monovalent hydrocarbon residue having 1 to 12 carbon atoms, optionally having one or more C-C multiple bonds and/or having optionally cycloaliphatic and/or aromatic portions;
R² is an acyl residue or a linear or branched, monovalent hydrocarbon residue having 1 to 12 carbon atoms, optionally having one or more C-C multiple bonds and/or having optionally cycloaliphatic and/or aromatic portions;
R³ is a linear or branched, divalent hydrocarbon residue having 1 to 12 carbon atoms, optionally having cyclic and/or aromatic portions, and optionally having one or more heteroatoms;
the index a has a value of 0, 1 or 2; and
the index n has a value of 1 to 3; and
- at least one silane-functional polymer **STP,** the silane-functional polymer **STP** being a silane-functional polyurethane polymer **STP1** which is obtainable by the reaction of a silane having at least one isocyanate-reactive group, with a polyurethane polymer containing isocyanate groups,
or
a silane-functional polyurethane polymer **STP2** obtainable by the reaction of an isocyanatosilane IS of formula (II) 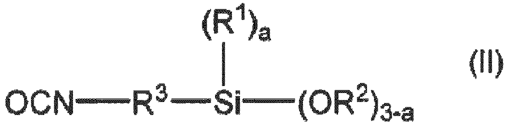 with a polymer which has hydroxy groups, mercapto groups and/or amino groups, a polymer having hydroxy groups being
- a high-molecular-weight polyoxyalkylene polyol having a degree of unsaturation of lower than 0.02 meq/g and having a molecular weight in the range of 4000 to 30 000 g/mol, or
- a polyurethane polymer having hydroxy groups and obtainable by the reaction of at least one polyisocyanate with at least one polyol where said polyol is selected from polyoxyalkylene polyol, polyester polyol, in which case the molecular weight is selected such that the polyester polyol is liquid at room temperature, polycarbonate polyol, poly(meth)acrylate polyol, polyhydroxy-functional fats and oils, polyhydrocarbon polyol and polyhydroxy-functional acrylonitrile/butadiene copolymer,
or
a silane-functional polymer **STP3** which is obtainable by a hydrosilylation reaction of polymers having terminal double bonds.

13. Composition according to claim 12, **characterized in that** the silane-terminated polymer is a silane-terminated polyurethane polymer **STP1.**

## Revendications

1. Polyester à fonctionnalité silane de formule (I) 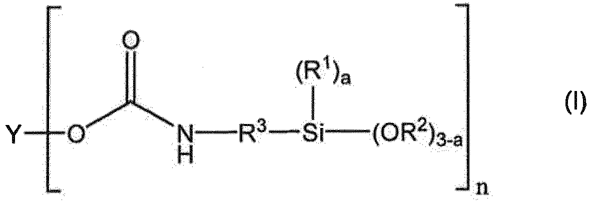 dans laquelle
Y représente un radical n-valent d'un polyester P solide à température ambiante, cristallin, terminé par des groupes hydroxyle, présentant un poids moléculaire moyen Mₙ > 2500 g/mole à 7000 g/mole, après élimination de n groupes hydroxyle ;
R¹ représente un radical hydrocarboné linéaire ou ramifié, monovalent, comprenant 1 à 12 atomes de carbone, qui présente le cas échéant une ou plusieurs liaisons multiples C-C et/ou le cas échéant des proportions cycloaliphatiques et/ou aromatiques ;
R² représente un radical acyle ou un radical hydrocarboné linéaire ou ramifié, monovalent, comprenant 1 à 12 atomes de carbone, qui présente le cas échéant une ou plusieurs liaisons multiples C-C et/ou le cas échéant des proportions cycloaliphatiques et/ou aromatiques ;
R³ représente un radical hydrocarboné linéaire ou ramifié, divalent, comprenant 1 à 12 atomes de carbone, qui présente le cas échéant des proportions cycliques et/ou aromatiques et le cas échéant un ou plusieurs hétéroatomes ;
l'indice a représente une valeur de 0, 1 ou 2 ; et l'indice n représente une valeur de 1 à 3.

2. Polyester à fonctionnalité silane selon la revendication 1, **caractérisé en ce que** le polyester P présente un poids moléculaire moyen Mₙ de 3500 à 6000 g/mole.

3. Polyester à fonctionnalité silane selon l'une quelconque des revendications précédentes, **caractérisé en ce que** a représente une valeur de 0 ou 1.

4. Polyester à fonctionnalité silane selon l'une quelconque des revendications précédentes, **caractérisé en ce que** n vaut 2.

5. Polyester à fonctionnalité silane selon l'une quelconque des revendications précédentes, **caractérisé en ce que** R² représente un groupe acyle ou alkyle comprenant 1 à 5 atomes de carbone.

6. Polyester à fonctionnalité silane selon l'une quelconque des revendications précédentes, **caractérisé en ce que** R³ représente un radical alkylène comprenant 1 à 3 atomes de carbone.

7. Polyester à fonctionnalité silane selon l'une quelconque des revendications précédentes, **caractérisé en ce que** le point de cristallisation du polyester P se situe à moins de 30°C sous le point de fusion du polyester P.

8. Utilisation d'un polyester à fonctionnalité silane selon l'une quelconque des revendications 1 à 7 comme constituant dans des adhésifs, des substances d'étanchéité ou des revêtements durcissant sous l'effet de l'humidité à base de polymères terminés par silane.

9. Utilisation selon la revendication 8 comme composant fusible réactif dans des adhésifs thermofusibles ou fusibles à température élevée, durcissant sous l'effet de l'humidité, à base de polymères terminés par silane.

10. Utilisation selon la revendication 8, **caractérisée en ce que** l'adhésif durcissant sous l'effet de l'humidité est un adhésif à deux composants durcissant sous l'effet de l'humidité, constitué par au moins un composant A comprenant au moins un polymère à fonctionnalité silane selon l'une quelconque des revendications 1 à 7 ainsi qu'au moins un polymère terminé par silane ; et un composant B comprenant de l'eau.

11. Utilisation selon l'une quelconque des revendications 8 à 10, **caractérisée en ce que** le polymère terminé par silane est un polymère STP1 de polyuréthane terminé par silane qui peut être obtenu par transformation d'un silane, qui présente au moins un groupe réactif par rapport aux groupes isocyanate, avec un polymère de polyuréthane, qui présente des groupes isocyanate.

12. Composition comprenant
- au moins un polyester à fonctionnalité silane de formule (I) 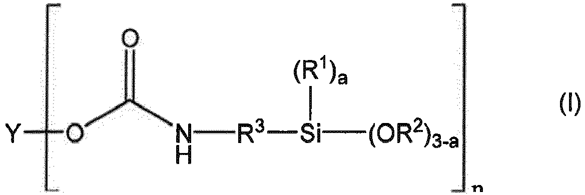 dans laquelle
Y représente un radical n-valent d'un polyester P solide à température ambiante, cristallin, terminé par des groupes hydroxyle après élimination de n groupes hydroxyle ;
R¹ représente un radical hydrocarboné linéaire ou ramifié, monovalent, comprenant 1 à 12 atomes de carbone, qui présente le cas échéant une ou plusieurs liaisons multiples C-C et/ou le cas échéant des proportions cycloaliphatiques et/ou aromatiques ;
R² représente un radical acyle ou un radical hydrocarboné linéaire ou ramifié, monovalent, comprenant 1 à 12 atomes de carbone, qui présente le cas échéant une ou plusieurs liaisons multiples C-C et/ou le cas échéant des proportions cycloaliphatiques et/ou aromatiques ;
R³ représente un radical hydrocarboné linéaire ou ramifié, divalent, comprenant 1 à 12 atomes de carbone, qui présente le cas échéant des proportions cycliques et/ou aromatiques et le cas échéant un ou plusieurs hétéroatomes ;
l'indice a représente une valeur de 0, 1 ou 2 ; et l'indice n représente une valeur de 1 à 3 ; ainsi que
- au moins un polymère STP à fonctionnalité silane, le polymère STP à fonctionnalité silane étant un polymère STP1 de polyuréthane à fonctionnalité silane qui peut être obtenu par transformation d'un silane, qui présente au moins un groupe réactif par rapport aux groupes isocyanate, avec au moins un polymère de polyuréthane, qui présente des groupes isocyanate, ou un polymère STP2 de polyuréthane à fonctionnalité silane, pouvant être obtenu par transformation d'un isocyanatosilane IS de formule (II) 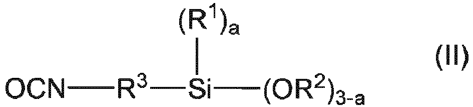 avec un polymère qui présente des groupes hydroxyle, des groupes mercaptan et/ou des groupes amino, un polymère présentant des groupes hydroxyle étant
- un polyoxyalkylènediol de haut poids moléculaire, présentant un degré d'insaturation inférieur à 0,02 méquiv/g et un poids moléculaire dans la plage de 4000 à 30.000 g/mole, ou
- un polymère de polyuréthane présentant des groupes hydroxyle, pouvant être obtenu par la transformation d'au moins un polyisocyanate avec au moins un polyol et ce polyol étant choisi parmi un polyoxyalkylènepolyol, un polyesterpolyol, pour lequel le poids moléculaire est choisi de manière telle que le polyesterpolyol est liquide à température ambiante, un polycarbonatepolyol, un poly(méth)acrylate-polyol, des graisses et des huiles à fonctionnalité polyhydroxy, un polyhydrocarbure-polyol et un copolymère d'acrylonitrile/butadiène à fonctionnalité polyhydroxy ou
- un polymère STP3 à fonctionnalité silane qui peut être obtenu par une réaction d'hydrosilylation de polymères présentant des doubles liaisons en position terminale.

13. Composition selon la revendication 12, **caractérisée en ce que** le polymère terminé par silane est un polymère STP1 de polyuréthane terminé par silane.
